# EUROPEAN PATENT APPLICATION

(11) **EP 4 147 556 A1**
(43) Date of publication of application: **15.03.2023**
(21) Application number: 22197436.3
(22) Date of filing: 10.02.2014
(51) Int. Cl.: A01D 34/00

(54) **IMPROVED ROBOTIC WORKING TOOL**

(30) Priority: 19.02.2013 SE 1350202
(62) Divisional of application: 19163623.2
(71) Applicant: Husqvarna AB, 561 82 Huskvarna (SE)
(72) Inventor: STRANDBERG, Stefan, 556 32 JÖNKÖPING (SE); MARKUSSON, Olle, 564 32 BANKERYD (SE)

(57) **Abstract**

A robotic work tool system (200), comprising a charging station (210), a boundary wire (250), a signal generator (240) for generating and transmitting a signal through said boundary wire (250) for demarcating a work area (205) and a robotic work tool (100), said robotic work tool (100) comprising a cutting blade (160) and a motor (165) for driving the cutting blade (160), the robotic work tool (100) being configured to determine a cutting load being exerted on the cutting blade (160) indicating a height of grass in the work area (205) and adapt a work schedule according to said cutting load prior to a next work session, wherein said work schedule includes a cutting height and/or a cutting time.

## Description

### TECHNICAL FIELD

This application relates to a method and a robotic work tool system for an improved scheduling of a work task.

### BACKGROUND

Contemporary work tools, such as lawnmowers, are often scheduled to perform the work task according to a schedule. The schedule may be as simple as 3 hours daily or more complicated taking into account other factors, such as time of day, the owner's schedule and weather factors, such as heavy rain or strong winds.

For instance, the European patent EP 2,342,964 discloses a method for scheduling mowing tasks by a robotic mower is provided. An estimated height of grass cut by the robotic mower is determined for a predetermined number of past mowing tasks. The estimated height of grass cut is compared with a predicted height of grass in an operating environment for the robotic mower. Then, a mowing schedule for the robotic mower is adjusted by decreasing a time between mowing tasks in response to the estimated height of grass cut being greater than the predicted height of grass. Alternatively, the mowing schedule for the robotic mower is adjusted by increasing the time between mowing tasks in response to the estimated height of grass cut being less than the predicted height of grass.

More particularly the European patent discloses a method for scheduling mowing tasks by a robotic mower, the method comprising determining an estimated height of grass cut by the robotic mower for a predetermined number of past mowing tasks, comparing the estimated height of grass cut with a predicted height of grass in an operating environment for the robotic mower, the predicted height of grass based on a grass growth model and calculated prior to a mowing task, adjusting a mowing schedule for the robotic mower by decreasing a time between mowing tasks in response to the estimated height of grass cut being greater than the predicted height of grass, and adjusting the mowing schedule for the robotic mower by increasing the time between mowing tasks in response to the estimated height of grass cut being less than the predicted height of grass.

This method and the disclosure of EP 2,342,964 suffer from the drawback that it is based on a complicated grass growth model that requires expensive equipment and complicated algorithms to implement.

The European patent application EP 1,933,467 discloses a method for communication between a charging station and a robot, via a pair of power lines coupled between a power supply in the charging station and a battery in the robot. In operation of an example, the power supply is sequentially switched between a first voltage level and a second voltage level in accordance with a predetermined signal pattern. The voltage level on the power lines in the robot is monitored and correlated with a specific command to be executed by the robot. More particularly EP 1,933,467 discloses a robotic mower which adjusts the mowing time based on the load on the cutting blades. The adjustment is made so that a scheduled excursion is inhibited. The robot can further utilize electric current readings from the motors that rotate the blades during the mowing operation, for example, resulting from resistance on the blade. If the robot is mowing at small current loads for more than a predetermined amount of time, it indicates the robot is traversing an already cut area (because of low mowing blade resistance from the lawn), and scheduled excursions may be inhibited or cancelled. If a sufficient amount of the mowing operation takes place at relatively high current loads (i.e., there is relatively large lawn resistance on the blades), the robot may need to spend more time mowing the lawn, which is done by adding more excursions in line with inhibiting excursions when the load is small.

Such a method and robot suffer from the drawback that it is difficult to predict how often the robot will actually be spending cutting the grass which complicates the scheduling of other tasks in the same area.

There is thus a need for an alternative solution for a robotic work tool that is simple and cost efficient to implement and which is easy to schedule.

### SUMMARY

It is an object of the teachings of this application to overcome the problems listed above by providing a robotic work tool system, comprising a charging station, a boundary wire, a signal generator for generating and transmitting a signal through said boundary wire for demarcating a work area and a robotic work tool, said robotic work tool comprising a cutting blade and a motor for driving the cutting blade, the robotic work tool being configured to determine a cutting load being exerted on the cutting blade indicating a height of grass in the work area and adapt a work schedule according to said load prior to a next work session, wherein said work schedule includes a cutting height and/or a cutting time.

It is also an object of the teachings of this application to overcome the problems listed above by providing a method for use in a robotic work tool system, comprising a charging station, a boundary wire, a signal generator for generating and transmitting a signal through said boundary wire for demarcating a work area and a robotic work tool, said robotic work tool comprising a cutting blade and a motor for driving the cutting blade, the method comprising determining a cutting load being exerted on the cutting blade indicating a height of grass in the work area and adapting a work schedule according to said cutting load prior to a next work session, wherein said work schedule includes a cutting height and/or a cutting time.

The robotic work tool 100 is thus not configure to predict a height of grass using a complicated grass growth model, but is solely configured to base the cutting time on the cutting load. By performing the adaptation of the work schedule prior to a next work session it is also easier to schedule the work sessions accurately.

The inventors of the present invention have realized, after inventive and insightful reasoning, that by simply basing the cutting time on the cutting load a simple and cost efficient alternative to the more complicated prior art robotic lawnmowers.

Furthermore, the cutting time is determined prior (or after) a cutting session which enables for a more precise scheduling as the cutting time may be predicted more accurately.

The teachings herein find use in robotic lawnmowers. The teachings herein also find use in robotic diggers, snow removers, robotic farming equipment and other robotic work tools wherein a work load may be correlated to the remainder of the work to be done.

Other features and advantages of the disclosed embodiments will appear from the following detailed disclosure, from the attached dependent claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF DRAWINGS

The invention will be described in further detail under reference to the accompanying drawings in which:
Figure shows a schematic overview of a robotic work tool according to one embodiment of the teachings of this application;
Figure 2 shows a schematic view of a robotic working tool system according to one embodiment of the teachings of this application;
Figure 3 shows a schematic illustration of the dependency between the load exerted on a work tool and the work time according to one embodiment of the teachings of this application;
Figure 4 shows a schematic illustration of the dependency between the load exerted on a work tool and the work time according to one embodiment of the teachings of this application and
Figure 5 shows a schematic illustration of a combined dependency between the load exerted on a work tool and the work time according to one embodiment of the teachings of this application.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

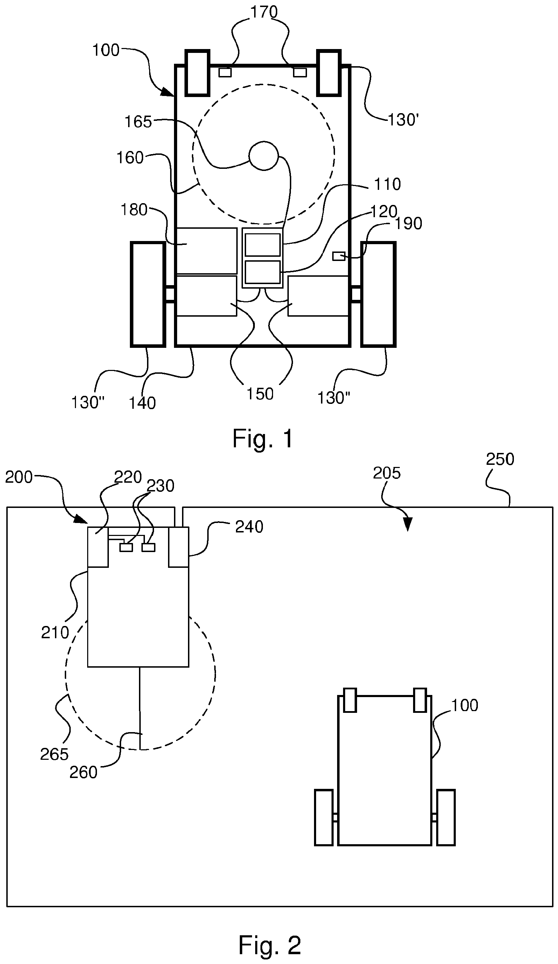

Figure 1 shows a schematic overview of a robotic work tool 100 having a body 140 and a plurality of wheels 130. In the exemplary embodiment of figure 1 the robotic work tool 100 has 4 wheels 130, two front wheels 130' and the rear wheels 130". At least some of the wheels 130 are drivabely connected to at least one electric motor 150. It should be noted that even if the description herein is focussed on electric motors, combustion engines may alternatively be used possibly in combination with an electric motor.

In the example of figure 1, the rear wheels 130" are connected to each an electric motor 150. This allows for driving the rear wheels 130" independently of one another which, for example, enables steep turning.

The robotic work tool 100 also comprises a controller 110. The controller 110 may be implemented using instructions that enable hardware functionality, for example, by using executable computer program instructions in a general-purpose or special-purpose processor that may be stored on a computer readable storage medium (disk, memory etc) 120 to be executed by such a processor. The controller 110 is configured to read instructions from the memory 120 and execute these instructions to control the operation of the robotic work tool 100. The controller 110 may be implemented using any suitable, publically available processor or Programmable Logic Circuit (PLC). The memory 120 may be implemented using any commonly known technology for computer-readable memories such as ROM, RAM, SRAM, DRAM, CMOS, FLASH, DDR, SDRAM or some other memory technology.

The robotic work tool 100 further has at least one sensor 170, in the example of figure 1 there are two sensors 170, arranged to detect a magnetic field (not shown). The sensors are connected to the controller 110 and the controller 1110 is configured to process any signals received from the sensors 170. The sensor signals may be caused by the magnetic field caused by a control signal being transmitted through a boundary wire (for more details on charging stations, control signals and boundary wires, see the description below with reference to figure 2). This enables the controller 110 to determine whether the robotic work tool 100 is inside or outside an area enclosed by a boundary wire.

The controller 110 is connected to the motors 150 for controlling the propulsion of the robotic work tool 100 which enables the robotic work tool 100 to service an enclosed area without leaving the area.

The robotic work tool 100 also comprises a work tool 160, which may be a grass cutting device, such as a rotating blade 160 driven by a cutter motor 165. The cutter motor 165 is connected to the controller 110 which enables the controller 110 to control the operation of the cutter motor 165. The controller is also configured to determine the load exerted on the rotating blade, by for example measure the power delivered to the cutter motor 165 or by measuring the axle torque exerted by the rotating blade. If the motor is a DC motor, the torque may be measured e.g. by measuring the electromotive force of the motor. The robotic work tool 100 is, in one embodiment, a robotic lawnmower.

The robotic work tool 100 also has (at least) one battery 180 for providing power to the motors 150 and the cutter motor 165.

In one embodiment the robotic work tool 100 may also be arranged with a position determining device 190, such as a navigation device. Examples of such navigation devices are satellite navigation devices (for example Global Positioning Systems or GPS) or deduced (or dead) reckoning devices, such as an odometer and a compass etc.

Figure 2 shows a schematic view of a robotic working tool system 200 comprising a charging station 210 and a boundary wire 250 arranged to enclose a working area 205, the working area 205 not necessarily being a part of the robot system 200, in which the robotic work tool 100 is supposed to service. The charging station 210 has a charger 220 coupled to, in this embodiment, two charging plates 230. The charging plates 230 are arranged to co-operate with corresponding charging plates (not shown) of the robotic work tool 100 for charging the battery 180 of the robotic work tool 100. The charging station 210 also has, or may be coupled to, a signal generator 240 for providing a control signal (not shown) to be transmitted through the boundary wire 250. The control signal preferably comprises a number of periodic current pulses. As is known in the art, the current pulses will generate a magnetic field around the boundary wire 250 which the sensors 170 of the robotic work tool 100 will detect. As the robotic work tool 100 (or more accurately, the sensor 170) crosses the boundary wire 250 the direction of the magnetic field will change. The robotic work tool 100 will thus be able to determine that the boundary wire has been crossed. The use of more than one sensor 170 enables the controller 110 of the robotic work tool 100 to determine how the robotic work tool 100 is aligned with relation to the boundary wire 250 by comparing the sensor signals received from each sensor 170. This enables the robot to follow the boundary wire 250, for example when returning to the charging station 210 for charging.

Optionally, the charging station 210 also has a guide cable 260 for enabling the robot to find the entrance of the charging station 210. In one embodiment the guide cable 260 is formed by a loop of the boundary wire 250.

In one embodiment the guide wire 260 is used to generate a magnetic field 265 for enabling the robotic work tool 100 to find the charging station without following a guide cable 260. The field is sometimes referred to as an F-range indicating the range within which the field can be sensed. The F-range 265 may be generated by the guide cable 260 or other cable, possibly being arranged in a loop, or other means for generating a magnetic field.

The robotic work tool 100 may then find the charging station 210 by following the F-range 265 towards increasing field strength.

By sending different current pulses through the guide cable 260 and the boundary wire 250, and possibly by generating the magnetic field in the F-range using a different current profile, the robotic work tool 100 will be able to determine which magnetic field results from which cable/field. The different control signals may for example comprise coded signals that differentiate the cables 250, 260.

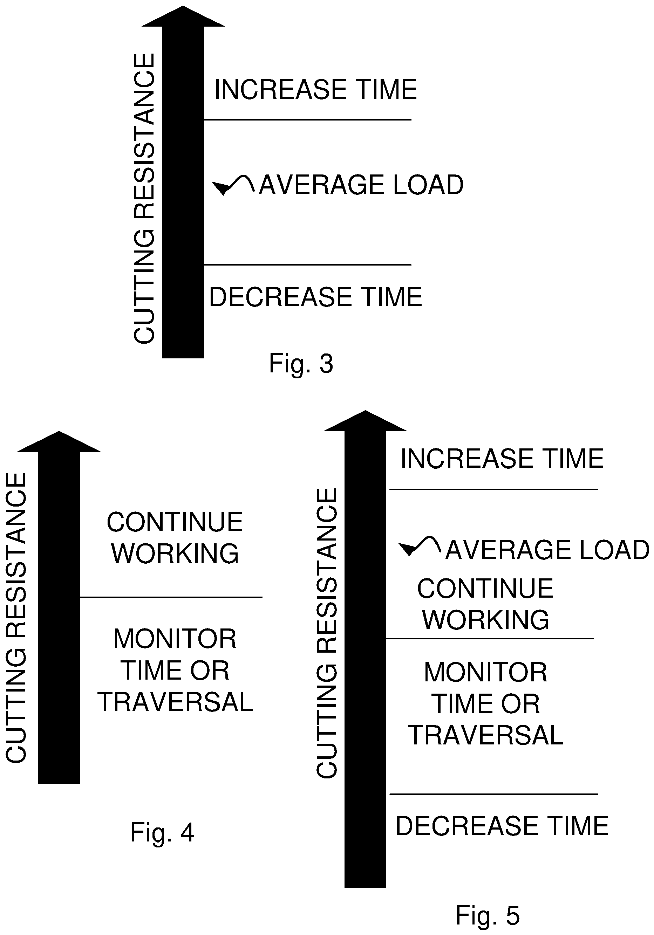

The robotic work tool 100 is configured for adapting a mowing schedule (with regards to mowing time and/or frequency of mowing) of the robotic work tool, being a robotic lawnmower, based on the load exerted on the cutting blade(s) 160 of the robotic lawnmower. If the load is above a certain level, this indicates that the grass is growing better than expected and the mowing time and/or frequency is to be increased. Conversely, if the load is below a certain level, this indicates that the grass is not growing as well as expected and the mowing time and/or frequency are to be decreased. Figure 3 shows a schematic illustration of the dependency between the cutting load exerted on the cutting blade and the cutting time. As can be seen, if the load is above a first threshold, the cutting time is increased by three hours daily. And, if the load is below a second threshold, the cutting time is decreased by three hours daily. The time increment of three hours used in the example of figure 3 is, of course, only an example and also other time increments can be used such as 1, 2, 3, 4, 5 ,6 or half hours. It should also be noted that the time increment for being above the first threshold may be different from the time increment for being below the second threshold.

The feature of increasing/decreasing the cutting time in increments has many advantages in that it can be projected what the new cutting time will be so it is easy for a user to plan ahead and make contingencies. Also, an increment of 3 hours ensures (in all likelihood) that the whole of the work area is covered once more. Naturally, the increment may be chosen to correspond to the size of the work area and the size and speed of the robot.

As can be seen from figure 3, it is the average cutting load that is compared to the thresholds. The average cutting load may be the average cutting load over a day's work sessions, over a work session or over a week's work sessions. Using the average cutting load enables the robotic work tool 100 to accommodate for and take into regards local and temporary fluctuations. For example, should only one area of a garden be covered with additional matter or if the grass has grown exceptionally thick due to a fluke incident this will not influence the schedule.

The cutting load threshold levels may be set dependent on a user setting for a desired grass height.

The desired grass height may also be regulated mechanically by lowering or raising the cutting blade 160. In such an embodiment the cutting load threshold levels may be fixed.

In one embodiment the controller is configured to automatically regulate the cutting height. In such an embodiment, the controller may be configured to adapt or adjust the cutting height by lowering the cutting height if it is determined that the cutting load is often below or close to the second threshold, thereby ensuring that the work is performed in a faster manner. Likewise, the may be configured to adapt or adjust the cutting height by raising the cutting height if it is determined that the cutting load is often above or close to the first threshold, thereby reducing the load on the motor and thereby reducing the power consumption.

The controller may be similarly configured to adapt the cutting height based on a measured average cutting load. If it is determined to be high the cutting height is lowered to reduce the power consumption and if it is determined that it is too low, the cutting height is lowered to increase the efficiency of the robotic work tool.

To further ensure that the robotic work tool is performing adequately within a work session, the robotic work tool may be configured to gradually (such as in increments) change the cutting height to increase the running time. If the robotic work tool determines that the motor is operating at a high level, i.e. measured cutting load is above or close to a threshold value indicating an operational level of 80%, 90%, 95% or 100% of maximum operation, the cutting height will be raised. The cutting load will then drop enabling the motor to work on a lower operational efficiency level thereby increasing the running time of the batteries. The robotic work tool may further be configured to determine that the motor is operating at an unnecessarily low operation efficiency level and in response thereto increase the cutting load by lowering the cutting height. This ensures that the robotic work tool is operating in a time efficient manner. As many motors are not linear with regards to power consumption vs. work performed, running the motor on for example 50% will enable the robot to run for more than double the time compared to running on 100%. This will effectively increase the total work being done between charging sessions. As charging is relatively time consuming it is much more time efficient if the charging sessions can be restricted to being performed between mowing or operating sessions.

This will also allow a robotic work tool to operate in an area where the initial workload may have been to high. For example, if the grass is simply too high to be mowed efficiently by the robotic work tool, the grass may till be mowed by initially using a higher cutting height and then switching to lower cutting height.

The same teachings are also applicable to other robotic work tools such as robotic diggers and robotic snow removers.

To improve the predictability of the scheduling the robotic work tool may also be configured to adapt the first and the second threshold based on an average measured work load. If the work load is continuously above or close to the first threshold the scheduling will often be changed. To avoid such changes, the robotic work tool may be configured to adapt the cutting time for all work sessions and at the same time adapting the thresholds to reflect this change. For example, if the cutting load is often above or close to the first threshold level, the cutting time may be increased by for example 1 hour for all work sessions and the threshold time will in turn be increased thereby avoiding unscheduled increases as the time has already been increased.

It should be noted that the actual values for the threshold and what is considered to be close to a threshold depends on the specific application and also the work area. One example is that the robotic work tool determines to be operating close to a threshold if it is within 90% under the first threshold or 110% above the second threshold. Further, the first threshold may correspond to 75% of the motor's maximum operational level and the second threshold may correspond to 35% of the motor's maximum operational level.

The robotic work tool 100 is thus not configure to predict a height of grass using a complicated grass growth model, but is solely configured to base the cutting time on the cutting load. This provides for a simple and cost efficient alternative to the more complicated prior art robot lawnmowers.

Furthermore, the cutting time is determined prior to (or after) a cutting session which enables for a more precise scheduling as the cutting time may be predicted more accurately.

In one embodiment the cutting time is adjusted by increasing or decreasing the cutting time in a work session. In one embodiment the cutting time is adjusted by increasing or decreasing the time between work sessions. In one embodiment the cutting time is adjusted by monitoring the cutting load and continuing cutting until the cutting load is below a third threshold for more than a predetermined time. The third threshold indicates that the lawn is properly mowed or that the work has been properly performed, at least locally, and the predetermined time should be set to equal the time it normally /or on average takes for the robot to traverse (most of or all of) the work area.

In one embodiment where the robotic work tool 100 is arranged with a navigation device 190, the robotic work tool 100 may monitor the robotic work tool's traversal of the work area 205 as the cutting load drops below the third threshold and monitor the traversal of the work area 205 as long as the cutting load is below the third threshold. If the robotic work tool determines that most of or all of the work area 205 has been traversed the robotic work tool stops operating. In one embodiment the robotic work tool 100 may be configured to monitor the traversal of a local part of the work area and remain in the local part of the work area until the (average) cutting load drops below the third threshold. The robotic work tool 100 will then move to another local part of the work area. Alternatively, the robotic work tool may be configured to determine that the cutting load is above the third threshold in only one (or more) local part(s) and in response thereto control the operation of the robotic work tool to remain in such local part(s) until the cutting load drops below the third threshold. Figure 4 shows the operation of the robotic work tool with regards to the third threshold and figure 5 shows the operation of the robotic work tool as a combination of the operations of figures 3 and 4.

It should be noted that the teachings relating to adjusting the cutting time based on the cutting load may be combined with the teachings of adjusting the cutting height based on the cutting load. The teachings may be combined so that the total cutting time is adjusted, and may also be combined so that the cutting time is adjusted for each or at least some of the different cutting heights.

In one embodiment the robotic work tool 100 may be designed to vary the mowing time not only based on the load measured, but also on changes such as if the mower has been moved to a new area or if the cutting height has been changed. Such changes do not reflect a growing pattern of the grass, but are results of that as the mower mows the grass with the blades at a particular cutting height, not all grass will be cut to that height. Some grass will be bent (possibly to later rise again) and to ensure that all grass is cut to the desired height, a longer mowing time will be needed.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A robotic work tool (100) comprising a cutting blade (160) and a motor (165) for driving the cutting blade (160), the robotic work tool (100) being configured to
determine a cutting load being exerted on the cutting blade (160) indicating a height of grass in the work area (205) and
adapt a work schedule according to said cutting load prior to a next work session, wherein said work schedule includes a cutting height and/or a cutting time, wherein said work schedule includes a cutting height, and wherein the robotic work tool (100) further being configured to
mechanically regulate the cutting height by lowering or raising the cutting blade (160).

2. The robotic work tool (100) according to claim 1, wherein the cutting load determined is based on an average of the load exerted on the cutting blade (160).

3. The robotic work tool (100) according to claim 1 or 2, wherein the robotic work tool (100) is configured to compare the load determined with a first cutting load threshold level and if the cutting load is above the first cutting load threshold level, increase a cutting time in the work schedule, and
wherein the robotic work tool (100) is configured to compare the load determined with a second cutting load threshold level, and if the cutting load is below the second cutting load threshold level, decrease the cutting time in the work schedule.

4. The robotic work tool (100) according to claim 3, wherein the cutting load threshold levels are dependent on a user setting for a desired grass height.

5. The robotic work tool (100) according to claim 3, wherein the robotic work tool (100) is configured to mechanically regulate a desired grass height by lowering or raising the cutting blade (160) and the cutting load threshold levels are fixed.

6. The robotic work tool (100) according to any preceding claim, wherein the cutting time is adjusted by increasing or decreasing the cutting time in a work session.

7. The robotic work tool (100) according to any preceding claim, wherein the cutting time is adjusted by increasing or decreasing the time between work sessions.

8. The robotic work tool (100) according to any preceding claim, wherein the robotic work tool (100) is further configured to determine that it has been moved to a new work area (205) and in response thereto adapt the work schedule.

9. The robotic work tool (100) according to any preceding claim, wherein the work schedule is adjusted by increasing or decreasing the cutting height in a work session.

10. The robotic work tool (100) according to any preceding claim, wherein the robotic work tool (100) is further configured to monitor the robotic work tool's traversal of at least a part of said work area and adapt said work schedule accordingly.

11. The robotic work tool (100) according to any preceding claim, wherein robotic work tool (100) is a robotic lawnmower.

12. A method for use in a robotic work tool (100) comprising a cutting blade (160) and a motor (165) for driving the cutting blade (160), said method comprising
determining a cutting load being exerted on the cutting blade (160) indicating a height of grass in the work area (205) and
adapting a work schedule according to said cutting load prior to a next work session, wherein said work schedule includes a cutting height, and wherein the method further comprises
mechanically regulating the cutting height by lowering or raising the cutting blade (160).
